# EUROPÄISCHE PATENTSCHRIFT

(11) **EP 2 858 742 B1**
(45) Veröffentlichungstag und Bekanntmachung des Hinweises auf die Patenterteilung: **04.05.2016**
(21) Anmeldenummer: 13728963.3
(22) Anmeldetag: 06.06.2013
(51) Int. Cl.: B01J 2/00, B01J 2/14

(54) **VORRICHTUNG ZUM BESCHICHTEN ODER UMHÜLLEN VON PARTIKELN**
DEVICE FOR COATING OR ENCLOSING PARTICLES
DISPOSITIF DE REVÊTEMENT OU ENROBAGE DE PARTICULES

(30) Priorität: 08.06.2012 DE 102012011286
(43) Veröffentlichungstag der Anmeldung: 15.04.2015
(73) Patentinhaber: Glatt Maschinen- und Apparatebau AG, 4133 Pratteln (CH)
(72) Erfinder: MAURER, Frank, 79594 Inzlingen (DE); UEBERSCHLAG, Pascal, 68480 Fislis (FR)
(74) Vertreter: Börjes-Pestalozza, Henrich
(86) Internationale Anmeldenummer: PCT/EP2013/001666
(87) Internationale Veröffentlichungsnummer: WO 2013/182312

(56) Entgegenhaltungen:
- CH-A5- 656 810
- CH-A5- 659 593
- DE-A1-102006 057 117

## Beschreibung

Die Erfindung betrifft eine Vorrichtung zum Beschichten oder Umhüllen von Partikeln, mit einer Trommel, die in einer Trommelkammer der Vorrichtung drehantreibbar gelagert ist und die mit dem zu beschichtenden oder zu umhüllenden Produkt befüllbar ist, mit zumindest einer Sprühdüse, die zum Aufbringen einer Flüssigkeit auf das in der Trommel befindliche Produkt vorgesehen ist, mit mindestens einem die Kammerwandung der Trommelkammer durchdringenden Trocknungsgas-Einlass, durch den ein Trocknungsgas in die Trommelkammer einleitbar ist und mit wenigstens einem der Trommel außenseitig angenäherten Trocknungsgas-Auslass zum Ausleiten des Trocknungsgases aus der Vorrichtung.

Vorrichtungen der eingangs erwähnten Art, die auch als Coater bezeichnet werden, sind insbesondere in der pharmazeutischen Industrie bereits in verschiedenen Ausführungen bekannt. Solche Coater weisen regelmäßig eine Trommel auf, die in einer Trommelkammer der Vorrichtung drehantreibbar gelagert ist. Um die Trommel mit dem zu beschichtenden oder zu umhüllenden Produkt befüllen zu können, weist die meist an die Trommel formangepasste und regelmäßig ebenfalls im wesentlichen zylindrisch ausgebildete Trommelkammer eine verschließbare Beschickungsöffnung auf, die in den Innenraum der Trommel führt. Im Trommel-Innenraum ist zumindest eine Sprühdüse vorgesehen, die zum Aufbringen einer die Beschichtung oder Umhüllung bildenden Flüssigkeit auf das in der Trommel befindliche Produkt vorgesehen ist. Die vorbekannten Coater weisen zumindest einen Trocknungsgas-Einlass auf, der die Kammerwandung der Trommelkammer durchdringt und durch den trockene Luft oder ein anderes Trocknungsgas derart in die Trommelkammer eingeleitet werden kann, dass das Trocknungsgas die allseits durch ein Lochblech gebildete Trommel durchströmt. Auf diese Weise wird das in der langsam drehenden Trommel befindliche und mit der aufgesprühten Flüssigkeit benetzte Produkt gleichzeitig getrocknet, so dass sich auf dem Produkt eine dünne Schicht der in der Flüssigkeit enthaltenen Substanz bildet. Die vorbekannten Coater weisen einen Trocknungsgas-Auslass auf, der in Drehrichtung leicht versetzt am Außenumfang der Trommel angeordnet ist und durch den die aus der Trommel kommende Abluft aus der Vorrichtung ausgeleitet werden kann.

Ziel ist es, dass anschließend das beschichtete oder umhüllte Produkt über seinen gesamten Außenumfang eine gleichmäßig dicke Schicht oder Umhüllung trägt. Um dieses Ziel zu erreichen, ist es notwendig, dass das Trocknungsgas die Trommel mit dem darin befindlichen Produkt gleichmäßig durchströmen kann. Das Trocknungsgas strömt jedoch durch den zumindest einen Trocknungsgas-Einlass mit höherer Geschwindigkeit ein; dadurch kann unmittelbar in dem an den Trocknungsgas-Einlass angrenzenden Bereich der Trommelkammer ein Unterdruck entstehen, der die Flüssigkeit in seine Richtung ansaugt; des weiteren kann die ungleiche Verteilung des Trocknungsgases einerseits und die zur Beschichtung oder Umhüllung bestimmte Flüssigkeit andererseits zu Anbackungen im Coater und letztlich zu einer ungleichen Beschichtung oder Umhüllung des Produktes führen.

Es besteht daher insbesondere die Aufgabe, eine Vorrichtung der eingangs erwähnten Art zu schaffen, bei der ein ungleichmäßiger Auftrag der Beschichtung oder Umhüllung auf dem Produkt und das funktionsbeeinträchtigende Auftreten von Anbackungen in der Vorrichtung durch eine ungleichmäßige Verteilung des Trocknungsgases oder der zur Beschichtung oder Umhüllung bestimmten Flüssigkeit vermieden wird.

Die erfindungsgemäße Lösung dieser Aufgabe besteht bei der Vorrichtung der eingangs erwähnten Art insbesondere darin, dass in den Strömungsweg zwischen dem mindestens einen Trocknungsgas-Einlass und der Trommel eine Prallfläche zwischengeschaltet ist, die zumindest eine Durchströmöffnung begrenzt:, deren lichte Gesamt-Öffnungsfläche im Vergleich zur lichten Gesamt-Öffnungsfläche des zumindest einen Trocknungsgas-Einlasses kleiner ist.

Bei der erfindungsgemäßen Vorrichtung ist eine Prallfläche vorgesehen, die in den Strömungsweg zwischen dem mindestens einen Trocknungsgas-Einlass und der Trommel zwischengeschaltet ist. Diese Prallfläche begrenzt zumindest eine Durchströmöffnung, deren lichte Gesamt-Öffnungsfläche im vergleich zur lichten Gesamt-Öffnungsfläche des zumindest einen Trocknungsgas-Einlasses kleiner ist. Da die von der Prallfläche begrenzte Durchströmöffnung im Vergleich zum Trocknungsgas-Einlass kleiner ist, wird dem Trocknungsgas ein die Strömungsgeschwindigkeit abbremsender Widerstand entgegengesetzt und das Trocknungsgas zwischen der den Trocknungsgas-Einlass aufweisenden Trommelkammer-Wandung und der Prallfläche derart aufgestaut, dass sich das Trocknungsgas über die Durchströmöffnung(en) gleichmäßig verteilen kann. Da das Trocknungsgas gleichmäßig und entschleunigt aus der zumindest einen Durchströmöffnung ausströmt, werden ungleichmäßige Beschichtungen oder Umhüllungen des Produktes oder auch Anbackungen in der Trommelkammer wirkungsvoll vermieden.

Die Herstellung der erfindungsgemäßen Vorrichtung wird erleichtert und die Ausgestaltung der Prallfläche wird vereinfacht, wenn die Prallfläche im Bereich einer Trommelkammer-Stirnseite vorgesehen ist.

Eine bevorzugte Ausführungsform gemäß der Erfindung sieht vor, dass die Trommelkammer eine stirnseitige und zum Trommelkammer-Innenraum führende Beschickungsöffnung hat, und dass die Prallfläche zwischen der der Beschickungsöffnung abgewandten Stirnseite der Trommelkammer und der Trommel angeordnet ist.

Möglich ist es, dass die Prallfläche durch eine Lochwand gebildet ist, die eine Vielzahl von Durchströmöffnungen hat. Eine solche Ausführung, bei der die Prallfläche durch eine Lochwand gebildet ist, bietet Vorteile insbesondere bei größeren Vorrichtungen mit voluminös dimensionierter Trommelkammer.

Eine konstruktiv besonders einfache und mit geringem Aufwand herstellbare Ausführungsform gemäß der Erfindung sieht jedoch zusätzlich oder stattdessen vor, dass die Prallfläche zwischen sich und der Umfangswandung der Trommelkammer einen als Durchströmöffnung ausgestalteten Ringspalt begrenzt.

Die Prallfläche lässt sich konstruktiv besonders einfach zwischen der Trommel und der benachbarten Trommelkammer-Stirnwand platzieren, wenn die Prallfläche plattenförmig ausgestaltet und in einer zur benachbarten Trommelkammer-Stirnseite parallelen Ebene angeordnet ist.

Eine bevorzugte Ausführungsform gemäß der Erfindung sieht vor, dass die Prallfläche einen runden Außenumfang hat und dass die Trommelkammer im Bereich der Prallfläche einen runden Querschnitt aufweist. Weist bei dieser Ausführung die Prallfläche einen im Vergleich zum Querschnitt der Trommelkammer auch nur geringfügig geringeren Durchmesser auf, ist zwischen dem Außenumfang der Prallfläche einerseits und dem Innenumfang der Trommelkammer andererseits eine als Ringspalt ausgebildete Durchströmöffnung umgrenzt.

Eine bevorzugte Ausführungsform gemäß der Erfindung sieht vor, dass die Prallfläche in der Trommelkammer drehbar gelagert ist und dass die Prallfläche dazu mit der Trommel vorzugsweise drehfest verbunden ist. Da bei dieser Ausführung die Prallfläche drehfest mit der Trommel verbunden ist und da die Trommel in der Trommelkammer drehantreibbar gelagert ist, kann sich die Prallfläche mit der Trommel in der Trommelkammer drehen. Durch das Drehen der Prallfläche wird eine Vergleichmäßigung des zwischen der Prallfläche und der benachbarten Trockenkammer-Stirnwand aufgestauten Trocknungsgases noch zusätzlich begünstigt.

Eine besonders einfach handhabbare Ausführungsform gemäß der Erfindung sieht vor, dass die der Trommel abgewandte Flachseite der Prallfläche als Standfläche für die Trommel im Falle ihrer Demontage aus der Trommelkammer ausgebildet ist. Bei dieser Ausführung kann die mit der Trommel drehfest verbundene Prallfläche auf ihrer der Trommel abgewandten Flachseite gleichzeitig als Standfläche dienen, auf der die Trommel beispielsweise zu Reinigungszwecken aufgestellt werden kann.

Weiterbildungen gemäß der Erfindung ergeben sich aus der nachfolgenden Beschreibung in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: die Trommelkammer einer zum Beschichten oder Umhüllen von Partikeln bestimmten Vorrichtung, wobei hier die eine Beschickungsöffnung aufweisende Stirnseite dieser Trommelkammer zu sehen ist,
- Fig. 2: die Trommelkammer aus Fig.1 in einer Draufsicht auf die Oberseite dieser Trommelkammer, wobei eine Antriebseinheit für eine in der Trommelkammer drehantreibbar gelagerte Trommel sowie die Zu- und AbluftAnschlüsse dieser Trommelkammer zu erkennen sind,
- Fig. 3: die Trommelkammer aus Fig.1 und 2 in einer perspektivischen Seitenansicht mit Blick auf die die Beschickungsöffnung aufweisende Stirnwand der Trommelkammer, und
- Fig. 4: die Trommelkammer aus den Figuren 1 bis 3 in einer perspektivischen Seitenansicht auf die antriebs- oder rückseitige Stirnwand der Trommelkammer.

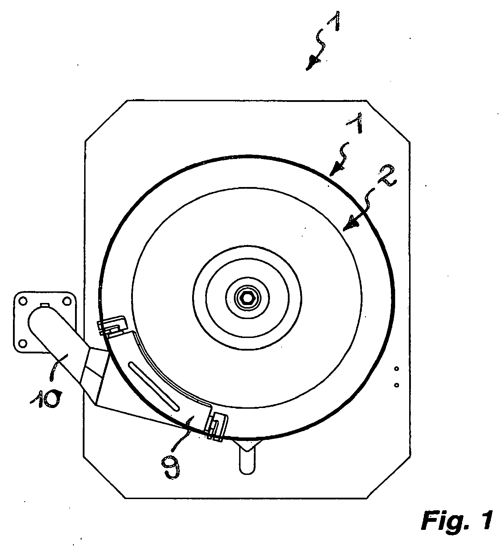

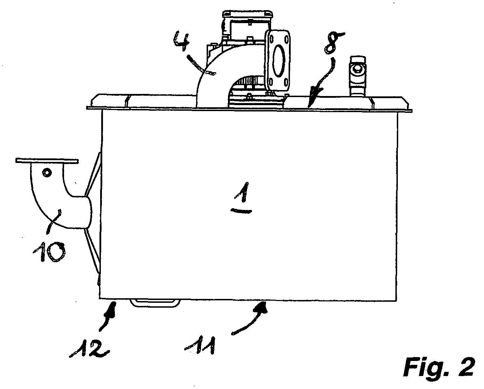

In den Figuren 1 bis 4 ist eine Trommelkammer 1 in verschiedenen Ansichten dargestellt. Die Trommelkammer 1 ist in einen hier nicht weiter gezeigten Coater oder dergleichen Vorrichtung eingebaut, die zum Beschichten oder Umhüllen von Partikeln bestimmt ist. In der Trommelkammer 1 ist eine Trommel 2 vorgesehen, die um eine hier etwa horizontal orientiert Achse 3 drehantreibbar gelagert ist. Diese Trommel 2, die während des Betriebs der Vorrichtung langsam dreht, ist mit dem zu beschichtenden oder zu umhüllenden Produkt befüllbar.

In der Trommel 2 ist eine Sprühleiste angeordnet, an der zumindest eine Sprühdüse vorgesehen ist, welche:zum Aufbringen einer Flüssigkeit auf das in der Trommel 2 befindliche Produkt vorgesehen ist. An der Trommelkammer 1 ist ein Rohrstutzen 4 als Trocknungsgas-Anschluss vorgesehen, dessen die Kammerwandung der Trommelkammer 1 durchdringendes Stutzenende einen Trocknungsgas-Einlass 5 bildet. Durch diesen Trocknungsgas-Einlass 5 ist Luft oder auch ein anderes Trocknungsgas in die Trommelkammer 1 einleitbar. Dieses die Trommelkammer 1 und die Trommel 2 durchströmende Trocknungsgas hat das in der Trommel 2 befindliche und mit der zur Beschichtung oder Umhüllung dienenden Flüssigkeit benetzte Produkt derart zu trocknen, dass das in der Flüssigkeit enthaltene Material eine möglichst gleichmäßige Schicht oder Umhüllung auf dem Produkt bildet.

Ziel ist es, dass anschließend das beschichtete oder umhüllte Produkt über seinen gesamten Außenumfang eine gleichmäßig dicke Schicht oder Umhüllung trägt. Um dieses Ziel zu erreichen, ist es notwendig, dass das Trocknungsgas die Trommel 2 mit dem darin befindlichen Produkt gleichmäßig durchströmen kann. Das Trocknungsgas strömt jedoch durch den Trocknungsgas-Einlass 5 mit hoher Geschwindigkeit in die Trommelkammer 1 ein. Um eine ungleiche Verteilung des Trocknungsgases einerseits und ein funktionsbeeinträchtigendes Auftreten von Anbackungen in der Trommelkammer 1 andererseits zu vermeiden, ist bei der Vorrichtung mit der hier dargestellten Trommelkammer 1 vorgesehen, dass in den Strömungsweg zwischen dem mindestens einen Trocknungsgas-Einlass 5 und der Trommel 2 eine Prallfläche 6 zwischengeschaltet ist, die zumindest eine Durchströmöffnung 7 begrenzt, deren lichte Gesamt-Öffnungsfläche im Vergleich zur lichten Gesamt-Öffnungsfläche des zumindest einen Trocknungsgas-Einlasses 5 kleiner ist. Bei der Vorrichtung mit der hier dargestellten Trommelkammer 1 ist somit eine Prallfläche 6 vorgesehen, die in den Strömungsweg zwischen den mindestens einen Trocknungsgas-Einlass 5 und der Trommel 2 zwischengeschaltet ist. Diese Prallfläche 6 begrenzt zumindest eine Durchströmöffnung 7, deren lichte Gesamt-Öffnungsfläche im Vergleich zur lichten Gesamt-Öffnungsfläche des zumindest einen Trocknungsgas-Einlasses 5 kleiner ist. Da die von der Prallfläche 6 begrenzte Durchströmöffnung 7 im Vergleich zum Trocknungsgas-Einlass 5 kleiner ist, wird dem Trocknungsgas ein die Strömungsgeschwindigkeit abbremsender Widerstand entgegengesetzt und das Trocknungsgas zwischen der den Trocknungsgas-Einlass 5 aufweisenden Trommelkammer-Wandung und der Prallfläche 6 derart aufgestaut, dass sich das Trocknungsgas über die Durchströmöffnung (en) 7 gleichmäßig verteilen kann. Da das Trocknungsgas gleichmäßig und entschleunigt aus der zumindest einen Durchströmöffnung 7 ausströmt, werden ungleichmäßige Beschichtungen öder Umhüllungen des Produktes oder Anbackungen in der Trommelkammer 1 wirkungsvoll vermieden.

Die Prallfläche 6 hat hier einen kreisrunden Außenumfang. Zumindest im Bereich der Prallfläche 6 weist auch die Trommelkammer 1 einen runden lichten Querschnitt auf. Die Prallfläche 6 ist mit der hier zylindrischen Trommel 2 drehfest verbunden und rotiert mit dieser im Innenraum der Trommelkammer 1. Dabei kann die der Trommel 2 abgewandte Flachseite der Prallfläche 6 als Standfläche für die Trommel 2 im Falle ihrer beispielsweise zu Reinigungszwecken erfolgten Demontage aus der Trommelkammer 1 ausgebildet sein.

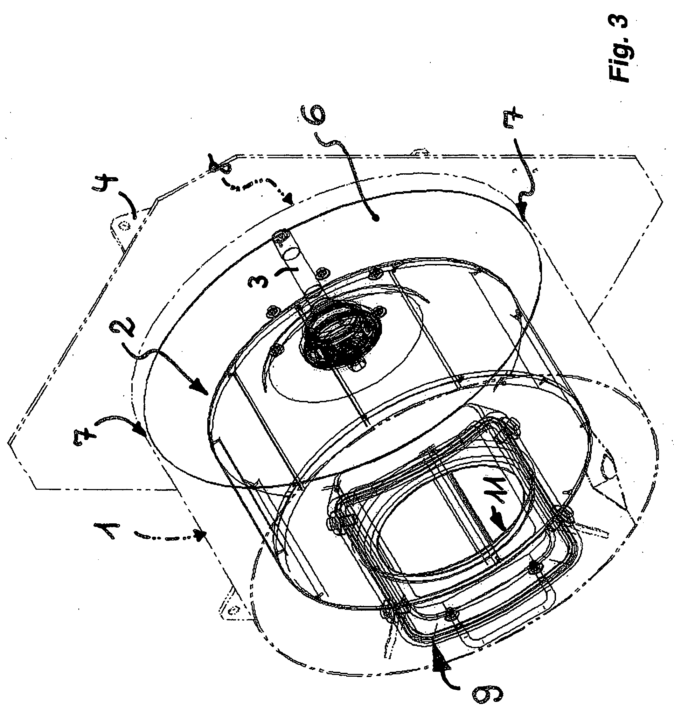

Die an ihrem Außenumfang kreisrunde Prallfläche 6 weist einen Durchmesser auf, der im Vergleich zu der im lichten Querschnitt ihres Trommelkammer-Innenraums ebenfalls runden Trommelkammer 1 geringfügig kleiner ist. Wie in Figur 3 angedeutet ist, begrenzt die Prallfläche 6 dadurch zwischen sich und der Umfangswandung der Trommelkammer 2 einen Ringspalt, der die Durchströmöffnung 7 bildet. Dem über den Trocknungsgas-Einlass 5 einströmenden Trocknungsgas setzt die Prallfläche 6 einen Widerstand entgegen, der das Trocknungsgas geringfügig aufstauen und in dem zwischen der Prallfläche 6 und der benachbarten Trommelkammer-Stirnwand 8 angeordneten Zwischenraum gleichmäßig verteilen lässt, so dass das Trocknungsgas anschließend in gleichmäßiger Verteilung und mit einer reduzierten Geschwindigkeit aus der als Ringspalt ausgestalteten Durchströmöffnung 7 austritt. Das somit in gleichmäßiger Verteilung in die Trommelkammer 1 einströmende Trocknungsgas wird dann durch die allseits durch ein luftdurchlässiges Lochblech gebildete Trommel 2 hindurch zu einem Trocknungsgas-Auslass 9 geführt, der im Bereich des in der Trommel 2 befindlichen Produktes außenseitig an die Trommel 2 angenähert und zum Ausleiten des Trocknungsgases aus der Trommelkammer 1 bestimmt ist. Der Trocknungsgas-Auslass 9 führt ebenfalls zu einem Rohrstutzen 10, in den die Abluft weitergeführt und aus der Vorrichtung ausgeleitet wird.

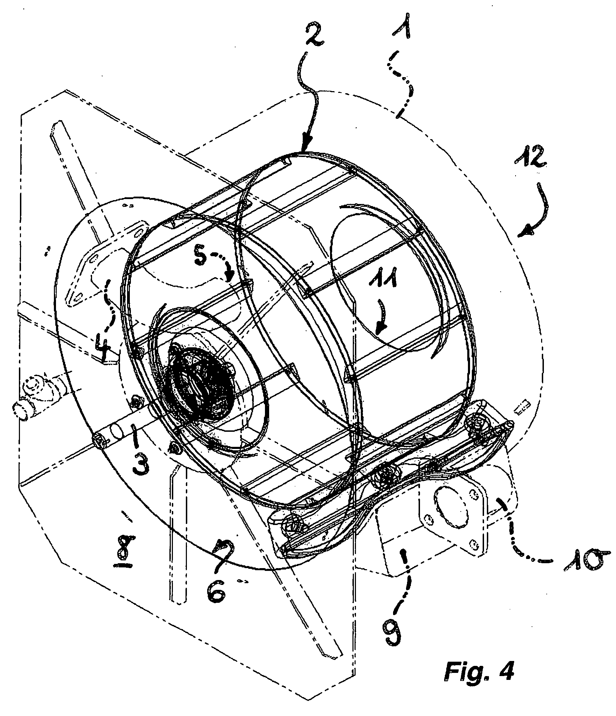

Die Trommelkammer 1 ist bis auf den Trocknungsgas-Einlass 5, den Trocknungsgas-Auslass 9 und eine Beschickungsöffnung 11 im wesentlichen geschlossen ausgebildet. Die Beschickungsöffnung 11 ist öffen- und verschließbar ausgebildet und führt in den Trommelkammer-Innenraum, so dass das Produkt über die Beschickungsöffnung 11 eingefüllt und entnommen werden kann. In den mit ,Röntgenblick' dargestellten Perspektivansichten gemäß Figur 3 und 4 ist erkennbar, dass die zum Trommel-Innenraum führende Beschickungsöffnung 11 an einer Stirnseite 12 der Trommelkammer 1 angeordnet ist und dass die Prallfläche 6 zwischen der der Beschickungsöffnung 11 abgewandten Stirnseite 8 der Trommelkammer 1 und der Trommel 2 angeordnet ist.

### Bezugszeichenliste

- 1: Trommelkammer
- 2: Trommel
- 3: Achse (der Trommel 2)
- 4: Rohrstutzen (zum Trocknungsgas-Einlass 5)
- 5: Trocknungsgas-Einlass
- 6: Prallfläche
- 7: Durchströmöffnung (von der Prallfläche 6 begrenzt)
- 8: Trommelkammer-Stirnwand (benachbart zur Prallfläche 6)
- 9: Trocknungsgas-Auslass
- 10: Rohrstutzen (am Trocknungsgas-Auslass 9)
- 11: Beschickungsöffnung
- 12: Trommelkammer-Stirnseite (mit der Beschickungsöffnung 11)

## Patentansprüche

1. Vorrichtung zum Beschichten oder Umhüllen von Partikeln, mit einer Trommel (2), die (2) in einer Trommelkammer (1) der Vorrichtung drehantreibbar gelagert ist und die (2) mit dem zu beschichtenden oder zu umhüllenden Produkt befüllbar ist, mit zumindest einer Sprühdüse, die zum Aufbringen einer Flüssigkeit auf das in der Trommel (2) befindliche Produkt vorgesehen ist, mit mindestens einem die Kammerwandung der Trommelkammer (1) durchdringenden Trocknungsgas-Einlass (5), durch den ein Trocknungsgas in die Trommelkammer (1) einleitbar ist und mit wenigstens einem der Trommel (2) außenseitig angenäherten Trocknungsgas-Auslass (9) zum Ausleiten des Trocknungsgases aus der Vorrichtung, **dadurch gekennzeichnet, dass** in den Strömungsweg zwischen dem mindestens einen Trocknungsgas-Einlass (5) und der Trommel (2) eine Prallfläche (6) zwischengeschaltet ist, die zumindest eine Durchströmöffnung (7) begrenzt, deren lichte Gesamtöffnungsfläche im Vergleich zur lichten Gesamtöffnungsfläche des zumindest einen Trocknungsgas-Einlasses (5) kleiner ist.

2. Vorrichtung nach Anspruch 1, **dadurch gekennzeichnet, dass** die Prallfläche (6) im Bereich einer Trommelkammer-Stirnseite (8) vorgesehen ist.

3. Vorrichtung nach Anspruch 1 oder 2, **dadurch gekennzeichnet, dass** die Trommelkammer (2) eine stirnseitige und zum Trommel-Innenraum führende Beschickungsöffnung (11) hat, und dass die Prallfläche (6) zwischen der der Beschickungsöffnung (11) abgewandten Stirnseite (8) der Trommelkammer (1) und der Trommel (2) angeordnet ist.

4. Vorrichtung nach einem der Ansprüche 1 bis 3, **dadurch gekennzeichnet, dass** die Prallfläche (6) durch eine Lochwand gebildet ist, die eine Vielzahl von Durchströmöffnungen hat.

5. Vorrichtung nach einem der Ansprüche 1 bis 4, **dadurch gekennzeichnet, dass** die Prallfläche (6) zwischen sich und der Umfangswandung der Trommelkammer (2) einen als Durchströmöffnung (7) ausgestalteten Ringspalt begrenzt.

6. Vorrichtung nach einem der Ansprüche 1 bis 5, **dadurch gekennzeichnet, dass** die Prallfläche (6) plattenförmig ausgebildet und in einer zur benachbarten Trommelkammer-Stirnseite (8) parallelen Ebene angeordnet ist.

7. Vorrichtung nach einem der Ansprüche 1 bis 6, **dadurch gekennzeichnet, dass** die Prallfläche (6) einen runden Außenumfang hat und dass die Trommelkammer (1) im Bereich der Prallfläche (6) einen runden lichten Querschnitt aufweist.

8. Vorrichtung nach einem der Ansprüche 1 bis 7, **dadurch gekennzeichnet, dass** die Prallfläche (6) in der Trommelkammer (1) drehbar gelagert ist und dass die Prallfläche (6) dazu mit der Trommel (2) vorzugsweise drehfest verbunden ist.

9. Vorrichtung nach einem der Ansprüche 1 bis 8, **dadurch gekennzeichnet, dass** die der Trommel (2) abgewandte Flachseite der Prallfläche (6) als Standfläche für die Trommel (2) im Falle ihrer Demontage aus der Trommelkammer (1) ausgebildet ist.

## Claims

1. Device for coating or encapsulating particles, having a drum (2) which (2) is mounted in a drum chamber (1) of the device in a rotationally drivable manner and which (2) can be filled with the product to be coated or encapsulated, having at least one spray nozzle which is provided to apply a liquid to the product located in the drum (2), having at least one drying gas inlet (5) which penetrates the chamber wall of the drum chamber (1) and through which a drying gas can be fed into the drum chamber (1), and having at least one drying gas outlet (9) brought near to the drum (2) on the outside in order to discharge the drying gas out of the device, **characterised in that** a deflector surface (6) is interposed in the flow path between the at least one drying gas inlet (5) and the drum (2) and defines at least one through-flow opening (7), the total clear open surface area of which is smaller than the total clear open surface area of the at least one drying gas inlet (5).

2. Device as claimed in claim 1, **characterised in that** the deflector surface (6) is provided in the region of an end face (8) of the drum chamber.

3. Device as claimed in claim 1 or 2, **characterised in that** the drum chamber (2) has a charging opening (11) located at the end face and leading to the interior of the drum, and that the deflector surface (6) is arranged between the end face (8) of the drum chamber (1), facing away from the charging opening (11), and the drum (2).

4. Device as claimed in any one of claims 1 to 3, **characterised in that** the deflector surface (6) is formed by a perforated wall which has a multiplicity of through-flow openings.

5. Device as claimed in any one of claims 1 to 4, **characterised in that** the deflector surface (6) defines, between itself and the peripheral wall of the drum chamber (2), an annular gap formed as a through-flow opening (7).

6. Device as claimed in any one of claims 1 to 5, **characterised in that** the deflector surface (6) is formed in a planar manner and is arranged in a plane parallel to the adjacent end face (8) of the drum chamber.

7. Device as claimed in any one of claims 1 to 6, **characterised in that** the deflector surface (6) has a round outer periphery, and that the drum chamber (1) has a round, clear cross-section in the region of the deflector surface (6).

8. Device as claimed in any one of claims 1 to 7, **characterised in that** the deflector surface (6) is mounted rotatably in the drum chamber (1), and that, for this purpose, the deflector surface (6) is connected to the drum (2) preferably for conjoint rotation therewith.

9. Device as claimed in any one of claims 1 to 8, **characterised in that** the flat side of the deflector surface (6) facing away from the drum (2) is formed as a standing surface for the drum (2) in the event that it is removed from the drum chamber (1).

## Revendications

1. Dispositif de revêtement ou d'enrobage de particules avec un tambour (2) qui (2) est monté de façon mobile en rotation dans une chambre de tambour (1) du dispositif et qui (2) peut être rempli avec le produit à revêtir ou à enrober, avec au moins une buse de pulvérisation, qui est prévue pour le dépôt d'un liquide sur le produit se trouvant dans le tambour (2), avec au moins une entrée de gaz de séchage (5) traversant la paroi de chambre de la chambre de tambour (1), par laquelle un gaz de séchage peut être introduit dans la chambre de tambour (1) et avec au moins une sortie de gaz de séchage (9) proche du côté de sortie du tambour (2) pour l'évacuation du gaz de séchage hors du dispositif, **caractérisé en ce qu'**une face d'impact (6) est interposée dans le chemin d'écoulement entre ladite au moins une entrée de gaz de séchage (5) et le tambour (2) qui limite au moins une ouverture de passage d'écoulement (7) dont la surface d'ouverture totale libre est plus petite par rapport à la surface d'ouverture totale libre de ladite au moins une entrée de gaz de séchage (5).

2. Dispositif selon la revendication 1, **caractérisé en ce que** la face d'impact (6) est prévue dans la région d'un côté frontal (8) de la chambre de tambour.

3. Dispositif selon la revendication 1 ou 2, **caractérisé en ce que** la chambre de tambour (2) comporte une ouverture de chargement (11) du côté frontal et conduisant à l'espace intérieur du tambour et **en ce que** la face d'impact (6) est disposée entre le coté frontal (8) de la chambre de tambour (1) situé à l'opposé de l'ouverture de chargement (11) et le tambour (2).

4. Dispositif selon l'une quelconque des revendications 1 à 3, **caractérisé en ce que** la face d'impact (6) est formée par une paroi perforée qui comporte une multiplicité d'ouvertures de passage d'écoulement.

5. Dispositif selon l'une quelconque des revendications 1 à 4, **caractérisé en ce que** la face d'impact (6) limite, entre elle-même et la paroi périphérique de la chambre de tambour (2), une fente annulaire configurée comme ouverture de passage d'écoulement (7).

6. Dispositif selon l'une quelconque des revendications 1 à 5, **caractérisé en ce que** la face d'impact (6) est réalisée en forme de plaque et est disposée dans un plan parallèle au côté frontal voisin (8) de la chambre de tambour.

7. Dispositif selon l'une quelconque des revendications 1 à 6, **caractérisé en ce que** la face d'impact (6) présente une périphérie extérieure ronde et **en ce que** la chambre de tambour (1) présente une section transversale libre ronde dans la région de la face d'impact (6).

8. Dispositif selon l'une quelconque des revendications 1 à 7, **caractérisé en ce que** la face d'impact (6) est montée de façon rotative dans la chambre de tambour (1) et **en ce que** la face d'impact (6) est à cet effet assemblée de préférence de façon solidaire en rotation avec le tambour (2).

9. Dispositif selon l'une quelconque des revendications 1 à 8, **caractérisé en ce que** le côté plat de la face d'impact (6) détourné du tambour (2) est réalisé sous forme de face de dépose pour le tambour (2) dans le cas de son démontage hors de la chambre de tambour (1).
